# EUROPÄISCHE PATENTSCHRIFT

(11) **EP 1 941 969 B1**
(45) Veröffentlichungstag und Bekanntmachung des Hinweises auf die Patenterteilung: **09.06.2010**
(21) Anmeldenummer: 07000254.8
(22) Anmeldetag: 08.01.2007
(51) Int. Cl.: B23Q 3/08

(54) **Vorrichtung und Verfahren zum Bearbeiten von Werkstücken**
Method and device for machining workpieces
Dispositif et procédé destinés au traitement de pièces à usiner

(43) Veröffentlichungstag der Anmeldung: 09.07.2008
(73) Patentinhaber: Weeke Bohrsysteme GmbH, 33442 Herzebrock-Clarholz (DE)
(72) Erfinder: Heimann, Reinhard, 33332 Gütersloh (DE); Voss, Hugo, 33449 Langenberg (DE)
(74) Vertreter: HOFFMANN EITLE

(56) Entgegenhaltungen:
- EP-A- 0 214 415
- DE-A1- 4 210 528
- DE-A1- 4 339 186
- DE-A1- 19 518 965
- DE-A1- 19 920 365
- DE-A1-102004 038 383
- FR-A1- 2 778 127
- JP-A- 1 183 334

## Beschreibung

### Technisches Gebiet

Die Erfindung betrifft eine Bearbeitungsvorrichtung zum Bearbeiten von bevorzugt plattenförmigen Werkstücken, die bevorzugt zumindest teilweise aus Holz, Holzwerkstoff, Kunststoff oder dergleichen bestehen, nach dem Oberbegriff von Anspruch 1, und ein Verfahren zur Halten der plattenförmigen Werkstücke in einer Bearbeitungsvorrichtung nach dem Oberbegriff von Anspruch 8.

### Stand der Technik

Eine gattungsgemäße Vorrichtung ist beispielsweise in der DE 10 2004 038 383 A1 und der DE 195 18 965 C5 offenbart. Bei diesen Bearbeitungsvorrichtungen werden die Werkstücke in einem Beschickungsbereich mittels Vakuumsaugtechnik oder Greifern kraftschlüssig auf einem Maschinentisch verspannt, um anschließend verschiedenen Bearbeitungen unterworfen zu werden, wie beispielsweise Bohren, Fräsen und dergleichen.

Dabei hat sich gezeigt, dass die Bearbeitung der Werkstücke durch das Vorhandensein von Saugern oder Greifern eingeengt wird. Um das komplette Werkstück bearbeiten zu können, ist häufig ein Umspannen erforderlich, was einen hohen Zeit- und Arbeitsaufwand sowie Mehrkosten bedeutet.

Darüber hinaus bringen die bekannten, häufig eingesetzten Vakuumsaugsysteme durch die erforderliche Saugleistung einen hohen Energieverbrauch mit sich.

In der EP 0 214 415 A wird eine Vorrichtung zum Aufspannen von Werkstücken offenbart, die eine Klebefolie oder ein entsprechendes Klebematerial aufweist. Allerdings ist die Klebefolie oder das Klebematerial in dieser Erfindung unter anderem mehrfach benutzbar, verbleibt in der Bearbeitungsmaschine und ist des Weiteren während der Bearbeitung nicht auf der Aufspannfläche, sondern vielmehr in der Ebene der Aufspannfläche vorgesehen.

### Darstellung der Erfindung

Der Erfindung liegt die Aufgabe zugrunde, eine Vorrichtung und ein Verfahren der eingangs genannten Art bereitzustellen, die bei geringem Energieverbrauch eine einfache Konstruktion der Vorrichtung bzw. einen einfachen Verfahrensablauf ermöglichen.

Diese Aufgabe wird durch eine Vorrichtung mit den Merkmalen von Anspruch 1 und ein Verfahren mit den Merkmalen von Anspruch 8 gelöst. Besonders bevorzugte Weiterbildungen der Erfindung sind Gegenstand der abhängigen Ansprüche.

Zur Lösung der zugrunde liegenden Aufgabe wird bei der vorliegenden Erfindung ein völlig neuer Weg eingeschlagen, indem die Werkstücke unter Einsatz mindestens einer Folie auf der Auflagefläche der Bearbeitungsvorrichtung gehalten werden. Auf diese Weise benötigt die erfindungsgemäße Vorrichtung keine aufwändigen beweglichen Teile oder energieintensiven Vakuumaggregate, so dass sich eine einfache Konstruktion mit geringem Energieverbrauch ergibt. Gleichzeitig wird eine sichere und variable Halterung und Fixierung der zu bearbeitenden Werkstücke erreicht, welche die Bearbeitung nicht einschränkt und ein Umspannen entbehrlich macht.

Darüber hinaus kann die Folie vorteilhaft auch als Schutzfolie für den späteren Transport oder die Lagerung des bearbeiteten Werkstücks dienen. Hierdurch kann der Aufwand für das Verpacken des jeweiligen Werkstücks deutlich vermindert werden, mit entsprechenden Zeit- und Kostenvorteilen. Dies ist auch Gegenstand des Verfahrensanspruchs 8.

Obgleich die mindestens eine Folie prinzipiell auf beliebige Weise eine Verbindung zwischen der Auflagefläche der Werkstückhalteeinrichtung und dem jeweiligen Werkstück herstellen kann, ist gemäß einer Weiterbildung der Erfindung vorgesehen, dass mindestens eine Seite der Folie Adhäsionseigenschaften gegenüber der Auflagefläche und/oder einer Oberfläche des Werkstücks aufweist. Hierdurch lässt sich auf besonders einfache und gleichzeitig effektive Weise die gewünschte Aufnahme und Halterung der jeweiligen Werkstücke auf der Auflagefläche erreichen. Dabei ist es besonders bevorzugt, dass die Adhäsionseigenschaften durch Maßnahmen erreicht sind, die ausgewählt sind zumindest aus chemischer Adhäsion, physikalischer Adhäsion, magnetischer Adhäsion und Kombinationen hiervon, obgleich die Erfindung nicht hierauf beschränkt ist.

Der Aufbau und die Zusammensetzung der Folie sind im Rahmen der vorliegenden Erfindung vielfältig variierbar und können in Abhängigkeit von den jeweiligen Anforderungen und gegebenenfalls den gewünschten Adhäsionseigenschaften ausgewählt werden. Für die meisten, hier zur Rede stehenden Anwendungsfälle hat es sich jedoch als vorteilhaft erwiesen, dass die Folie zumindest eine Lage aus Kunststoff, Metall oder Kraftpapier aufweist.

Die jeweilige Folie kann auf unterschiedliche Weise auf die jeweilige Auflagefläche bzw. das jeweilige Werkstück aufgebracht werden, beispielsweise auch manuell. Auch kann die Folie prinzipiell vorab oder schon bei der Herstellung eines zu bearbeitenden Werkstücks auf dieses aufgebracht werden, und das Werkstück kann dann gemeinsam mit der Folie in die Bearbeitungsvorrichtung eingebracht werden, was anhand des untenstehend beschriebenen, erfindungsgemäßen Verfahrens noch besser deutlich werden wird.

Gemäß einer Weiterbildung der erfindungsgemäßen Vorrichtung ist jedoch vorgesehen, dass diese ferner eine Zufuhreinrichtung zum Zuführen und gegebenenfalls Abführen der Folie zu und von der Auflagefläche aufweist. Auf diese Weise können beliebige Werkstücke zügig und fehlerfrei in der Vorrichtung aufgenommen und gehalten werden, ohne dass die Werkstücke speziell vorbereitet werden müssten und ohne die Gefahr, dass die Folie vor dem Auflegen auf die Auflagefläche beschädigt wird und/oder ihre Adhäsionseigenschaften verliert.

Gemäß einer Weiterbildung der Erfindung ist ferner vorgesehen, dass die Bearbeitungsvorrichtung eine Andruckeinrichtung, insbesondere eine Druckrolle, zum Andrücken der Werkstücke auf der Auflagefläche aufweist. Hierdurch kann erreicht werden, dass der gewünschte Verbund zwischen Folie und Auflagefläche bzw. Werkstück verbessert oder überhaupt erst aktiviert wird, beispielsweise indem durch das Andrücken Luft herausgepresst wird, die zwischen der Folie und der Auflagefläche bzw. dem Werkstück vorhanden ist. Wie Versuche gezeigt haben, lässt sich hierdurch ein Unterdruckzustand erzeugen, der ausreichend ist, um das Werkstück in der gewünschten Position auf der Auflagefläche zu halten. Andererseits kann die Unterdruckeinrichtung aber auch eingerichtet sein, auf einen Überdruckbetrieb umgeschaltet zu werden, um ein Abheben der Folie und/oder des Werkstücks zu erleichtern.

Alternativ oder zusätzlich ist gemäß einer Weiterbildung der Erfindung vorgesehen, dass die Bearbeitungsvorrichtung ferner eine Unterdruckeinrichtung mit Saugöffnungen aufweist, die bevorzugt im Bereich der Werkstückhalteeinrichtung, insbesondere der Auflagefläche angeordnet sind. Die Unterdruckeinrichtung kann dazu beitragen, die Folie, ähnlich wie eine Andruckeinrichtung, in den gewünschten Haltezustand zu bringen (anzusaugen). Sobald dies erreicht ist, kann die Unterdruckeinrichtung beispielsweise abgeschaltet werden, oder kann alternativ auch weiter betrieben werden, um die Haltekraft der Folie zu unterstützen. In diesem Falle würde der Betrieb der Unterdruckeinrichtung spätestens dann eingestellt werden, wenn das Werkstück aus der Bearbeitungsvorrichtung entnommen oder in dieser verschoben werden soll, sodass beim Anheben des jeweiligen Werkstücks nur die Haltekräfte der Folie überwunden werden müssen. Diese Kombination von Folie und Unterdruckeinrichtung kann besonders vorteilhaft sein, wenn hohe Bearbeitungskräfte auftreten und die vollständige Aufnahme derartiger hoher Bearbeitungskräfte ausschließlich über eine Folie dazu führen würde, dass das Werkstück anschließend nur schwierig von der Folie zu lösen wäre.

Gemäß einer Weiterbildung der Erfindung ist ferner vorgesehen, dass sie eine Reinigungseinrichtung zum Reinigen der Auflagefläche und/oder einer Werkstückoberfläche aufweist. Auf diese Weise lässt sich sicherstellen, dass der Verbund zwischen der Folie einerseits und der Auflagefläche bzw. Werkstückoberfläche andererseits nicht durch Verschmutzungen wie Späne und dergleichen beeinträchtigt wird, wie sie im Bereich einer Bearbeitungsvorrichtung in größeren Mengen anfallen.

Gemäß einer weiteren Zielrichtung stellt die vorliegende Erfindung ein Verfahren zum Halten bevorzugt plattenförmiger Werkstücke nach Anspruch 8 bereit. Gemäß dem erfindungsgemäßen Verfahren muss die jeweilige Bearbeitungsvorrichtung nicht mit einer Einrichtung zum Aufbringen und Andrücken der jeweiligen Folie versehen werden, sodass sich deren Konstruktion vereinfacht, während darüber hinaus das Aufbringen und Andrücken der mindestens einen Folie auf der Oberfläche des Werkstücks zügig und rationell vorab durchgeführt werden kann, beispielsweise manuell oder mittels eines vollautomatischen Verfahrens.

### Kurze Beschreibung der Zeichnungen

- Fig. 1: zeigt schematisch eine Seitenansicht einer ersten Ausführungsform der Bearbeitungsvorrichtung gemäß der vorliegenden Erfindung.
- Fig. 2: zeigt schematisch eine teilweise Seitenansicht einer zweiten Ausführungsform der Bearbeitungsvorrichtung gemäß der vorliegenden Erfindung.
- Fig. 3: zeigt schematisch eine teilweise Seitenansicht einer dritter Ausführungsform der Bearbeitungsvorrichtung gemäß der vorliegenden Erfindung.
- Fig. 4: zeigt schematisch eine teilweise Seitenansicht einer vierten Ausführungsform der Bearbeitungsvorrichtung gemäß der vorliegenden Erfindung.
- Fig. 5: zeigt schematisch eine teilweise Seitenansicht einer fünften Ausführungsform der Bearbeitungsvorrichtung gemäß der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

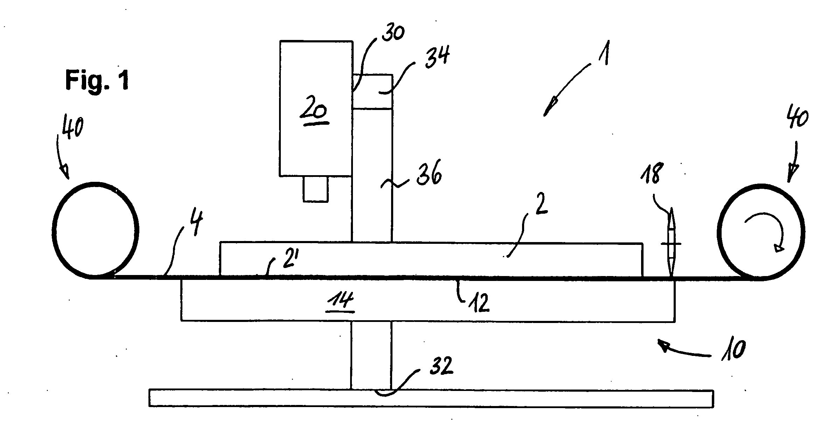

Eine Bearbeitungsvorrichtung 1 als erste Ausführungsform der vorliegenden Erfindung ist in Fig. 1 schematisch in einer stark vereinfachten Seitenansicht gezeigt. Die Bearbeitungsvorrichtung 1 dient in der vorliegenden Ausführungsform zum Bearbeiten von plattenförmigen Werkstücken 2, die zumindest abschnittsweise aus Holz, Holzwerkstoff, Kunststoff oder dergleichen bestehen, wie sie beispielsweise im Bereich der Möbelindustrie häufig zum Einsatz kommen. Dabei kann die Bearbeitungsvorrichtung 1 dazu ausgelegt sein, spanende Bearbeitungen wie Bohren, Fräsen oder dergleichen auszuführen, oder beispielsweise auch die jeweiligen Werkstücke 2 zu beschichten, mit einer Kante zu versehen oder dergleichen, wobei die Art der Bearbeitung im Rahmen der vorliegenden Erfindung selbstverständlich nicht beschränkt ist.

Die Bearbeitungsvorrichtung 1 besitzt zunächst eine Werkstückhalteeinrichtung 10 mit einem Auflagetisch (Werkstückspanntisch) 14, der eine glattflächige Auflagefläche 12 zur Aufnahme der plattenförmigen Werkstücke 2 besitzt. Dabei kann der Auflagetisch 14 beispielsweise stationär oder gegebenenfalls auch verfahrbar ausgestaltet sein. Oberhalb des Auflagetisches 14 ist eine Bearbeitungsvorrichtung 20 zum Bearbeiten der Werkstücke 2 angeordnet, beispielsweise ein Spindelaggregat, in das die jeweils zur Bearbeitung der Werkstücke erforderlichen Werkzeuge oder Aggregate eingewechselt werden können. Selbstverständlich können auch mehrere Bearbeitungsvorrichtungen 20 in unterschiedlichsten Ausgestaltungen vorgesehen sein.

Die Bearbeitungsvorrichtung 20 ist in der vorliegenden Ausführungsform an einem Ausleger 34 angeordnet, der wiederum an einem Ständer 36 angebracht ist. Dabei ist die Bearbeitungsvorrichtung 20 über geeignete Führungen 30 entlang des Auslegers 34 und auch orthogonal hierzu (von oben nach unten in Fig. 1) verfahrbar. Darüber hinaus ist der Ständer 36 über eine Führung 32 (von links nach rechts in Fig. 1) verfahrbar. Somit stellen die Führungen 30, 32 zusammen mit hier nicht näher gezeigten Antrieben eine Fördereinrichtung zum Erzeugen einer Relativbewegung zwischen der Bearbeitungsvorrichtung 10 und der Werkstückhalteeinrichtung 20 dar. Alternativ oder zusätzlich ist es jedoch, wie oben bereits erwähnt, ebenso möglich, dass der Auflagetisch 14 verfahren werden kann, sodass der Verfahrantrieb (nicht gezeigt) des Auflagetisches 14 ebenfalls Teil einer derartigen Fördereinrichtung sein kann.

Zwischen der Auflagefläche 12 des Auflagetisches 14 und einem in die Bearbeitungsvorrichtung 1 eingelegten Werkstück 2 (bzw. dessen Oberfläche 2') ist in der vorliegenden Ausführungsform eine Folie 4 derart vorgesehen, um das zu bearbeitende Werkstück 2 auf der Werkstückhalteeinrichtung 10 aufzunehmen und zu halten. Dabei wird die Haltekraft zwischen der Folie 4 einerseits und dem Werkstück 2 sowie der Auflagefläche 12 andererseits in der vorliegenden Ausführungsform durch Adhäsionseigenschaften der Folie 4 gegenüber der Auflagefläche 12 und der Oberfläche 2' des Werkstücks 2 erzielt.

Die Adhäsionseigenschaften der Folie können im Rahmen der vorliegenden Erfindung auf unterschiedlichste Art und Weise erreicht werden, von denen einige nachfolgend rein beispielhaft und ohne die Erfindung zu beschränken, angegeben werden. Zunächst können die Adhäsionseigenschaften auf chemische Weise erreicht werden, beispielsweise durch Beschichten der Folie mit einem geeigneten Haftmittel bzw. Klebstoff. Darüber hinaus können die Adhäsionseigenschaften auch auf physikalische Art und Weise hervorgerufen werden, d.h. unter Ausnutzung des sogenannten "Gecko-Effekts" im Nanostrukturbereich der Folienoberfläche. Ferner kann die Adhäsion auch durch Nutzung einer magnetischen oder elektromagnetischen Wirkung hervorgerufen werden, beispielsweise durch Vorsehen ferrithaltiger oder magnetisch wirkender Partikel in der jeweiligen Folie. Auch Kombinationen der genannten Maßnahmen oder weiterer Maßnahmen sind im Rahmen der vorliegenden Erfindung möglich.

Zu diesem Zweck kann die Folie 4 im Rahmen der Erfindung einlagig oder mehrlagig ausgestaltet sein und beispielsweise zumindest eine Lage aus Kunststoff, Metall oder Kraftpapier aufweisen, wobei auch andere Materialien vorteilhaft zum Einsatz kommen können.

Um für das jeweilige Werkstück 2 zügig eine geeignete Folie bereitstellen zu können, besitzt die Bearbeitungsvorrichtung 1 in der vorliegen Ausführungsform ferner eine Zufuhreinrichtung 40 zum Zuführen und gegebenenfalls Abführen der Folie 4 zu und von der Auflagefläche 12. Die Zufuhreinrichtung 40 besitzt in der vorliegenden Ausführungsform eine Zufuhrrolle 40 (rechts in Fig. 1) und eine Abführrolle 40 (links in Fig. 1).

Der Betrieb der Bearbeitungsvorrichtung 1 vollzieht sich in der vorliegenden Ausführungsform beispielsweise wie folgt. Bevor ein zu bearbeitendes Werkstück 2 in die Bearbeitungsvorrichtung eingebracht wird, wird mittels der Zufuhreinrichtung 40 ein Folienabschnitt 4 in den Bereich oberhalb des Auflagetisches 14 eingefördert und glattflächig auf dessen Auflagefläche 12 abgelegt. Daraufhin wird das zu bearbeitende Werkstück 2 mittels einer geeigneten Zufuhrvorrichtung oder manuell auf der Folie 4 oberhalb der Auflagefläche 12 abgelegt. Anschließend wird das Werkstück mittels einer geeigneten Druckrolle (nicht gezeigt) an die Folie 4 bzw. die Auflagefläche 12 angedrückt, um gegebenenfalls die Adhäsionswirkung zu verstärken oder überhaupt erst zu wecken.

Anschließend kann die gewünschte Bearbeitung an dem Werkstück unter Einsatz der Bearbeitungsvorrichtung 20 oder anderer Bearbeitungsvorrichtungen durchgeführt werden. Danach kann das Werkstück 2 mit oder ohne daran haftender Folie 4 aus der Bearbeitungsvorrichtung 1 entnommen werden, wobei im ersteren Falle die Folie unter Einsatz eines in Fig. 1 gezeigten Foliencutters 18 durchtrennt werden kann, um an dem Werkstück 2 zu verbleiben und gegebenenfalls als Schutzfolie zu dienen. Abschließend kann die Auflagefläche 12 des Auflagetisches 14 mittels einer nicht gezeigten Reinigungseinrichtung oder gegebenenfalls auch manuell gereinigt werden, um eine Wiederholung der oben beschriebenen Verfahrensschritte einzuleiten. Darüber hinaus kann die nicht gezeigte Reinigungseinrichtung auch zum Reinigen der mit der Folie 4 in Berührung zu bringenden Werkstückoberfläche 2' eingesetzt werden.

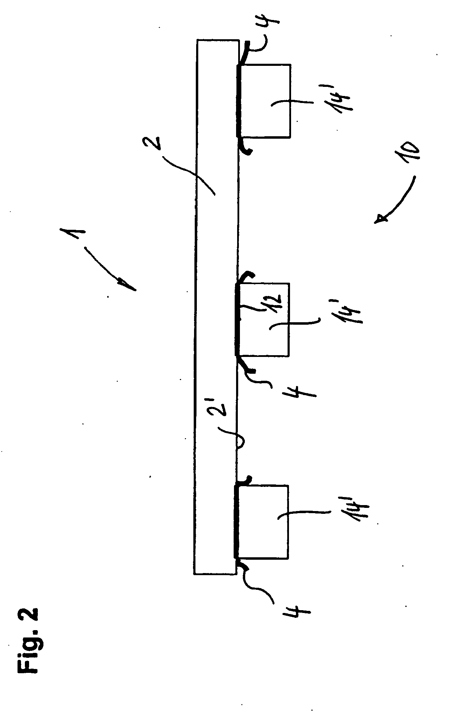

Fig. 2 zeigt schematisch eine teilweise Seitenansicht einer zweiten Ausführungsform der erfindungsgemäßen Bearbeitungsvorrichtung 1, die sich von der in Fig. 1 gezeigten Ausführungsform primär dadurch unterscheidet, dass anstelle eines flächigen Auflagetisches 14 mehrere Auflagekonsolen 14' vorgesehen sind, wobei zwischen den Auflageflächen 12 der Auflagekonsolen 14' und der Oberfläche 2' des jeweiligen Werkstücks 2 wiederum eine Folie bzw. Folienabschnitte 4 vorgesehen sind.

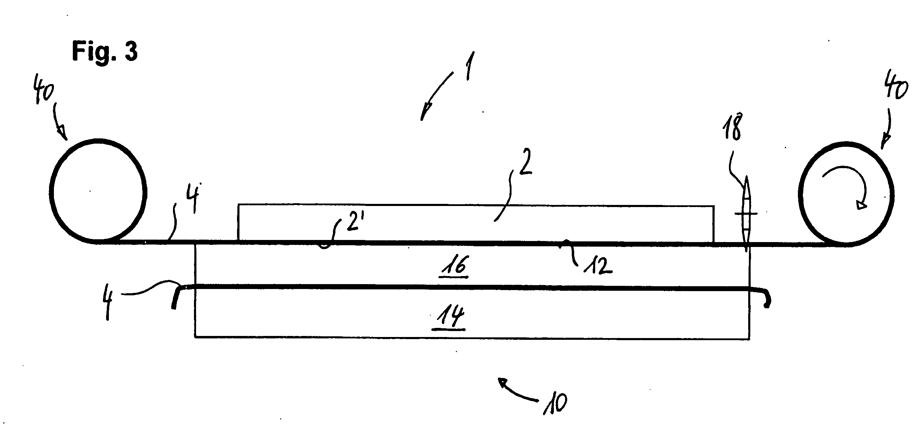

Fig. 3 zeigt schematisch in einer teilweisen Seitenansicht eine dritte Ausführungsform der erfindungsgemäßen Bearbeitungsvorrichtung 1, die sich von der in Fig. 1 gezeigten, ersten Ausführungsform primär dadurch unterscheidet, dass zwischen dem Auflagetisch 14 und dem zu bearbeitenden Werkstück 2 eine Schonplatte 16 angeordnet ist. Derartige Schonplatten kommen primär zum Einsatz, wenn die Werkstücke 2 derart bearbeitet werden sollen, dass eine Beschädigung des Auflagetisches 14 zu befürchten ist, wie beispielsweise bei einem vollständigen Durchtrennen des Werkstücks 2. In diesem Falle ist die Auflagefläche 12 für das Werkstück 2 an der Schonplatte 16 gebildet, und die oben diskutierte Folie 4 ist zwischen dieser Auflagefläche 12 und der Oberfläche 2' des Werkstücks 2 angeordnet. Darüber hinaus kann auch die Schonplatte 11 über eine entsprechende Folie 4 an dem Auflagetisch 14 dauerhaft oder temporär gehalten sein, obgleich die Schonplatte auch auf andere Art und Weise an dem Auflagetisch 14 angebracht sein kann.

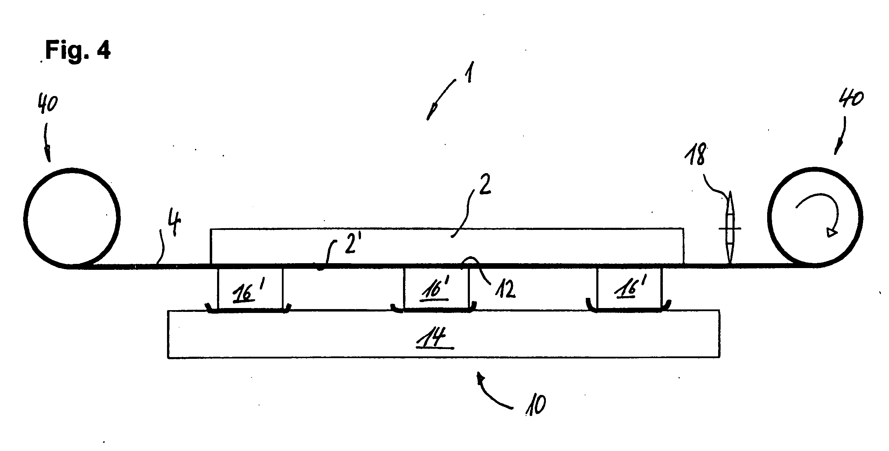

Fig. 4 zeigt schematisch eine teilweise Seitenansicht einer vierten Ausführungsform der Bearbeitungsvorrichtung 10, die sich von der in Fig. 3 gezeigten, dritten Ausführungsform primär dadurch unterscheidet, dass anstelle einer großflächigen Schonplatte 16 mehrere Schonplattenabschnitte 16' angeordnet sind, ähnlich wie die Auflagekonsolen 14' in Fig. 2. Anstelle von Schonplattenabschnitten können jedoch auch Distanzklötze 16' zum Einsatz kommen, und zwar insbesondere wenn Unterschnitte am Werkstück 2 ermöglicht werden sollen.

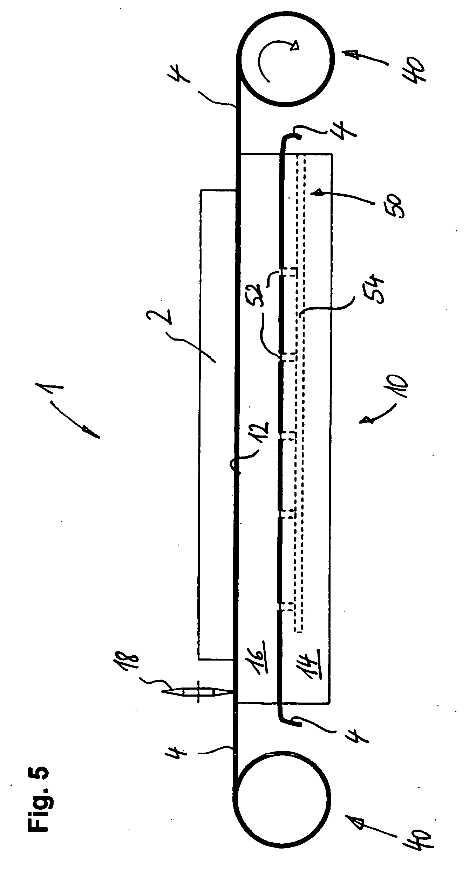

Fig. 5 zeigt schematisch in einer teilweisen Seitenansicht eine fünfte Ausführungsform der erfindungsgemäßen Bearbeitungsvorrichtung, die prinzipiell auf der in Fig. 3 gezeigten, dritten Ausführungsform basiert und sich durch folgende Merkmale auszeichnet. In der in Fig. 5 gezeigten Ausführungsform sind in dem Auflagetisch 14 Saugöffnungen 42 angeordnet, die der Schonplatte 16 zugewandt sind und über Druckleitungen 52 mit einer nicht gezeigten Saug- bzw. Druckluftquelle in Verbindung stehen. Da die Schonplatte 16 in der vorliegenden Ausführungsform eine poröse bzw. luftdurchlässige Struktur besitzen kann, kann über die Saugöffnungen 52 im Saugbetrieb der Saug- bzw. Druckluftquelle eine zusätzliche Haltekraft auf die zwischen dem Werkstück 2 und der Schonplatte 16 angeordnete Folie 4 aufgebracht werden. Darüber hinaus kann, falls die Folie 4 zumindest teilweise luftdurchlässig ist, über die Saugöffnungen 52 auch unmittelbar eine Haltekraft auf das Werkstück 2 aufgebracht werden. Auf diese Weise kann für bestimmte Anwendungen die Haltekraft des Werkstücks 2 erhöht werden, bzw. es kann eine Folie mit schwächeren Adhäsionseigenschaften eingesetzt werden, beispielsweise um das Abheben des Werkstücks 2 nach der Bearbeitung zu erleichtern.

Obgleich in Fig. 5 nicht gezeigt, können insbesondere im Falle einer nicht luftdurchlässigen Schonplatte 16 die Leitungen 54 auch durch die Schonplatte 16 hindurchgeführt werden, sodass die Saugöffnungen 52 im Bereich der Auflagefläche 12 der Schonplatte 16 angeordnet sind.

In jedem Falle kann der Betrieb der Saug- bzw. Druckluftquelle bevorzugt auch von Saugbetrieb auf Druckluftbetrieb umgeschaltet werden. Auf diese Weise kann das Abheben der Folie 4 und/oder des Werkstücks 2 erheblich erleichtert werden.

Der Betrieb der unter Bezugnahme auf die Fig. 2 bis 5 beschriebenen Bearbeitungsvorrichtungen 1 entspricht prinzipiell dem oben beschriebenen Betrieb der in Fig. 1 gezeigten Bearbeitungsvorrichtung. Darüber hinaus ist im Rahmen der vorliegenden Erfindung jedoch auch vorgesehen, dass die Werkstücke 2 außerhalb der Bearbeitungsvorrichtung 1 bereits mit einer Folie 4 versehen werden, sodass die Bearbeitungsvorrichtung 1 nicht notwendigerweise eine entsprechende Folie 4 bereitstellen muss.

Auch Kombinationen beider Konzepte sind möglich, da es im Rahmen der vorliegenden Erfindung ebenso vorteilhaft sein kann, zwischen dem jeweiligen Werkstück 2 und der Auflagefläche 12 eine Mehrzahl von Folien übereinander anzuordnen. In diesem Falle könnten beispielsweise auch unterschiedliche Folien gepaart werden, beispielsweise eine erste Folie, deren Adhäsionseigenschaften zu der Oberfläche 2' des Werkstücks 2 passen, und eine zweite Folie, deren Adhäsionseigenschaften zu der Oberfläche der Auflagefläche 12 passen, wobei die beiden Folien wiederum zueinander passende Adhäsionseigenschaften besitzen können.

Dies bedeutet, dass im Rahmen einer Weiterbildung der Erfindung vorteilhaft auch mindestens zwei Folien zwischen dem Werkstück 2 und der Auflagefläche 12 angeordnet sein können. Hierdurch kann beispielsweise in der Bearbeitungsvorrichtung 1 stets eine zu der Auflagefläche 12 passende Standardfolie 4 verwendet werden, während das jeweilige Werkstück maßgeschneidert mit einer zu diesem passenden Folie versehen wird.

## Patentansprüche

1. Bearbeitungsvorrichtung (1) zum Bearbeiten von plattenförmigen Werkstücken (2), die bevorzugt zumindest abschnittsweise aus Holz, Holzwerkstoff, Kunststoff oder dergleichen bestehen, mit
einer Werkstückhalteeinrichtung (10) mit einer Auflagefläche (12) zur Auflage der plattenförmigen Werkstücke (2),
einer Bearbeitungseinrichtung (20) zum Bearbeiten der Werkstücke (2), und
einer Fördereinrichtung (30, 32) zum Erzeugen einer Relativbewegung zwischen der Bearbeitungseinrichtung (20) und der Werkstückhalteeinrichtung (10),
**dadurch gekennzeichnet, dass** sie eine Zufuhreinrichtung (40) zum Zuführen einer Folie (4) zu der Auflagefläche (12) aufweist, wobei
auf der Auflagefläche (12) der Werkstückhalteeinrichtung (10) zumindest abschnittsweise die zugeführte Folie (4) derart vorgesehen ist, um das jeweils zu bearbeitende Werkstück (2) auf der Werkstückhalteeinrichtung (10) aufzunehmen und zu halten, wobei die Folie (4) derartige Adhäsionseigenschaften gegenüber der Auflagefläche (12) und einer Oberfläche (2') des Werkstücks (2) aufweist, dass beim Entnehmen des Werkstücks (2) aus der Bearbeitungsvorrichtung (1) die Folie (4) am Werkstück (2) anhaften kann.

2. Bearbeitungsvorrichtung nach Anspruch 1, **dadurch gekennzeichnet, dass** die Adhäsionseigenschaften durch Maßnahmen erreicht sind, die ausgewählt sind zumindest aus chemischer Adhäsion, physikalischer Adhäsion, magnetischer Adhäsion und Kombinationen hiervon.

3. Bearbeitungsvorrichtung nach einem der vorhergehenden Ansprüche, **dadurch gekennzeichnet, dass** die Folie (4) zumindest eine Lage aus Kunststoff, Metall oder Kraftpapier aufweist.

4. Bearbeitungsvorrichtung nach einem der vorhergehenden Ansprüche, **dadurch gekennzeichnet, dass** sie ferner eine Andruckeinrichtung, insbesondere eine Druckrolle, zum Andrücken der Werkstücke auf der Auflagefläche aufweist.

5. Bearbeitungsvorrichtung nach einem der vorhergehenden Ansprüche, **dadurch gekennzeichnet, dass** die Auflagefläche (12) der Werkstückhalteeinrichtung (10) zumindest abschnittsweise durch mindestens eine Schonplatte (16) gebildet ist.

6. Bearbeitungsvorrichtung nach einem der vorhergehenden Ansprüche, **dadurch gekennzeichnet, dass** sie ferner eine Unterdruckeinrichtung (50) mit Saugöffnungen (52) aufweist, die bevorzugt im Bereich der Werkstückhalteeinrichtung (10), insbesondere der Auflagefläche (12) angeordnet sind.

7. Bearbeitungsvorrichtung nach einem der vorhergehenden Ansprüche, **dadurch gekennzeichnet, dass** sie ferner eine Reinigungseinrichtung zum Reinigen der Auflagefläche und/oder einer Werkstückoberfläche aufweist.

8. Verfahren zum Halten bevorzugt plattenförmiger Werkstücke (2), die bevorzugt zumindest abschnittsweise aus Holz, Holzwerkstoff, Kunststoff oder dergleichen bestehen, auf einer Auflagefläche (12) einer Werkstückhalteeinrichtung (10) einer Bearbeitungsvorrichtung (1), mit den Schritten:
Zuführen einer Folie,
Aufbringen und Andrücken mindestens einer Folie (4) auf eine Oberfläche (2') eines Werkstücks (2),
Auflegen und Andrücken des Werkstücks (2) auf die Auflagefläche (12) der Werkstückhalteeinrichtung (10) in der Bearbeitungsvorrichtung (1), wobei die mindestens eine Folie (4) der Auflagefläche (12) zugewandt ist, um das jeweils zu bearbeitende Werkstück (2) auf der Werkstückhalteeinrichtung (10) aufzunehmen und zu halten,
Entnehmen des Werkstücks (2) mit mindestens jeweils einer daran haftenden Folie (4) aus der Bearbeitungsvorrichtung (1).

9. Verfahren nach Anspruch 8, **dadurch gekennzeichnet, dass** die mindestens eine Folie (4) außerhalb der Bearbeitungsvorrichtung (1) auf die Oberfläche (2') des Werkstücks (2) aufgebracht und bevorzugt auch angedrückt wird.

10. Verfahren nach Anspruch 8 oder 9, **dadurch gekennzeichnet, dass** die Folie (4) als Schutzfolie für die weitere Handhabung des Werkstücks dient.

11. Verfahren nach einem der Ansprüche 8 bis 10, **dadurch gekennzeichnet, dass** es unter Einsatz einer Vorrichtung (1) nach einem der Ansprüche 1 bis 8 ausgeführt wird.

## Claims

1. Processing apparatus (1) for processing sheet-like workpieces (2) which are preferably in at least one section made of timber, derived timber products, plastic or the like, having
a workpiece holding device (10) with a supporting surface (12) for supporting the sheet-like workpieces (2),
a processing device (20) for processing the workpieces (2), and
a conveying device (30, 32) for producing a relative movement between the processing device (20) and the workpiece holding device (10),
**characterised in that** it has a delivery device (40) for delivering a film (4) to the supporting surface (12), wherein
on the supporting surface (12) of the workpiece holding device (10) in at least one section the delivered film (4) is provided in such a way as to receive and hold the workpiece (2) to be processed at any given time on the workpiece holding device (10), wherein the film (4) has such adhesion properties in relation to the supporting surface (12) and a surface (2') of the workpiece (2) that, when the workpiece (2) is removed from the processing apparatus (1), the film (4) can cling to the workpiece (2).

2. Processing apparatus according to claim 1, **characterised in that** the adhesion properties are achieved by measures which are selected at least from chemical adhesion, physical adhesion, magnetic adhesion and combinations thereof.

3. Processing apparatus according to any of the preceding claims, **characterised in that** the film (4) has at least one layer of plastic, metal or kraft paper.

4. Processing apparatus according to any of the preceding claims, **characterised in that** it further has a pressure device, in particular a pressure roller, for pressing the workpieces on the supporting surface.

5. Processing apparatus according to any of the preceding claims, **characterised in that** the supporting surface (12) of the workpiece holding device (10) is formed in at least one section by at least one protective plate (16).

6. Processing apparatus according to any of the preceding claims, **characterised in that** it further has a partial pressure device (50) with suction openings (52) which are preferably arranged in the region of the workpiece holding device (10), in particular the supporting surface (12).

7. Processing apparatus according to any of the preceding claims, **characterised in that** it further has a cleaning device for cleaning the supporting surface and/or a workpiece surface.

8. Method for holding preferably sheet-like workpieces (2) which are preferably in at least one section made of timber, derived timber products, plastic or the like, on a supporting surface (12) of a workpiece holding device (10) of a processing apparatus (1), having the steps of:
delivering a film,
applying and pressing at least one film (4) onto a surface (2') of a workpiece (2),
laying and pressing the workpiece (2) on the supporting surface (12) of the workpiece holding device (10) in the processing apparatus (1), wherein the at least one film (4) faces towards the supporting surface (12) in order to receive and hold the workpiece (2) to be processed at any given time on the workpiece holding device (10),
removing the workpiece (2) with at least one film (4) clinging thereto at any given time from the processing apparatus (1).

9. Method according to claim 8, **characterised in that** the at least one film (4) is applied to the surface (2') of the workpiece (2) and preferably also pressed onto it outside the processing apparatus (1).

10. Method according to claim 8 or 9, **characterised in that** the film (4) serves as a protective film for further handling of the workpiece.

11. Method according to any of claims 8 to 10, **characterised in that** it is carried out using an apparatus (1) according to any of claims 1 to 8.

## Revendications

1. Dispositif d'usinage (1), pour usiner des pièces d'oeuvre (2) en forme de plaques, composées de préférence, au moins par tronçons, de bois, matériau ligneux, matière synthétique ou analogue, avec
un dispositif de maintien de pièce d'oeuvre (10), muni d'une surface de pose (12) pour poser les pièces d'oeuvre (2) en forme de plaques,
une unité d'usinage (20), pour usiner les pièces d'oeuvre (2), et
un dispositif de manutention (30, 32), pour produire un mouvement relatif entre l'unité d'usinage (20) et le dispositif de maintien de pièce d'oeuvre (10),
**caractérisé en ce qu'**il présente un dispositif
d'alimentation (40), pour amener une feuille (4) à la surface de pose (12), où
sur la surface de pose (12) du dispositif de maintien de pièce d'oeuvre (10), la feuille (4) amenée est prévue, au moins par tronçons, de manière à supporter et maintenir la pièce d'oeuvre (2) chaque fois à usiner sur le dispositif de maintien de pièce d'oeuvre (10), la feuille (4) présentant, par rapport à la surface de pose (12) et une surface (2') de la pièce d'oeuvre (2), des propriétés d'adhésion telles que la feuille (4) puisse adhérer sur la pièce d'oeuvre (2), lors du prélèvement de la pièce d'oeuvre (2) hors du dispositif d'usinage (1).

2. Dispositif d'usinage selon la revendication 1, **caractérisé en ce que** les propriétés d'adhésion sont obtenues grâce à des dispositions sélectionnées au moins parmi l'adhésion chimique, l'adhésion physique, l'adhésion magnétique et des combinaisons de celles-ci.

3. Dispositif d'usinage selon l'une des revendications précédentes, **caractérisé en ce que** la feuille (4) présente au moins une couche en matière synthétique, métal ou papier kraft.

4. Dispositif d'usinage selon l'une des revendications précédentes, **caractérisé en ce qu'**il présente en outre un dispositif de pressage, en particulier un rouleau de pressage, pour presser les pièces d'oeuvre sur la surface de pose.

5. Dispositif d'usinage selon l'une des revendications précédentes, **caractérisé en ce que** la surface de pose (12) du dispositif de maintien de pièce d'oeuvre (10) est formée, au moins par tronçons, par au moins une plaque de protection (16).

6. Dispositif d'usinage selon l'une des revendications précédentes, **caractérisé en ce qu'**il présente en outre un dispositif à vide (50) muni d'ouvertures d'aspiration (52), disposées de préférence dans la zone du dispositif de maintien de pièce d'oeuvre (10), en particulier de la surface de pose (12).

7. Dispositif d'usinage selon l'une des revendications précédentes, **caractérisé en ce qu'**il présente en outre un dispositif de nettoyage, pour nettoyer la surface de pose et/ou une surface de pièce d'oeuvre.

8. Procédé de maintien de pièces d'oeuvre (2), de préférence en forme de plaques, composées de préférence, au moins par tronçons, de bois, matériau ligneux, matière synthétique ou analogue, sur une surface de pose (12) d'un dispositif de maintien de pièce d'oeuvre (10) d'un dispositif d'usinage (1), comprenant les étapes ci-après :
amenée d'une feuille,
application et pressage d'au moins une feuille (4) sur une surface (2') d'une pièce d'oeuvre (2),
pose et pressage de la pièce d'oeuvre (2) sur la surface de pose (12) du dispositif de maintien de pièce d'oeuvre (10) dans le dispositif d'usinage (1), la au moins une feuille (4) étant tournée vers la surface de pose (12), de manière à supporter et maintenir la pièce d'oeuvre (2) chaque fois à usiner sur le dispositif de maintien de pièce d'oeuvre (10),
prélèvement de la pièce d'oeuvre (2), avec au moins chaque fois une feuille (4) adhérant sur elle, hors du dispositif d'usinage (1).

9. Procédé selon la revendication 8, **caractérisé en ce que** la au moins une feuille (4) est appliquée à l'extérieur du dispositif d'usinage (1), sur la surface (2') de la pièce d'oeuvre (2) et, de préférence, également pressée.

10. Procédé selon la revendication 8 ou 9, **caractérisé en ce que** la feuille (4) sert de feuille protectrice pour la suite de la manutention de la pièce d'oeuvre.

11. Procédé d'usinage selon l'une des revendications 8 à 10, **caractérisé en ce qu'**il est mis en oeuvre en utilisant un dispositif (1) selon l'une des revendications 1 à 8.
